(19) **Europäisches Patentamt / European Patent Office / Office européen des brevets**

(11) **EP 4 330 624 B1**

(12) **FASCICULE DE BREVET EUROPEEN**

(45) Date de publication et mention de la délivrance du brevet:
**11.03.2026 Bulletin 2026/11**

(21) Numéro de dépôt: **22725886.0**

(22) Date de dépôt: **27.04.2022**

(51) Classification Internationale des Brevets (IPC):
**G01B 11/24** (2006.01)     **G01B 11/25** (2006.01)
**G01M 11/00** (2006.01)

(52) Classification Coopérative des Brevets (CPC):
**G01B 11/2441; G01M 11/005**

(86) Numéro de dépôt international:
**PCT/EP2022/061279**

(87) Numéro de publication internationale:
**WO 2022/229295 (03.11.2022 Gazette 2022/44)**

(54) **PROCEDE POUR ESTIMER LA GEOMETRIE D'UNE SURFACE REFLECHISSANTE D'UN OBJET**

VERFAHREN ZUR ABSCHÄTZUNG DER GEOMETRIE EINER REFLEKTIERENDEN OBERFLÄCHE EINES OBJEKTS

METHOD FOR ESTIMATING THE GEOMETRY OF A REFLECTING SURFACE OF AN OBJECT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **28.04.2021 FR 2104441**

(43) Date de publication de la demande:
**06.03.2024 Bulletin 2024/10**

(73) Titulaire: **Office National d'Etudes et de Recherches Aerospatiales**
**91123 Palaiseau Cedex (FR)**

(72) Inventeurs:
- **JONQUIERE, Hugo**
  **77550 Moissy-Cramayel (FR)**
- **MUGNIER, Laurent**
  **91123 Palaiseau Cedex (FR)**
- **MERCIER-YTHIER, Renaud**
  **77550 Moissy-Cramayel (FR)**

(74) Mandataire: **IPAZ**
**Bâtiment Platon**
**Parc Les Algorithmes**
**91190 Saint-Aubin (FR)**

(56) Documents cités:
- XIAO YONG-LIANG ET AL: "Optical fringe-reflection deflectometry with sparse representation", vol. 104, 1 May 2018 (2018-05-01), AMSTERDAM, NL, pages 62 - 70, XP055863339, ISSN: 0143-8166, Retrieved from the Internet <URL:https://www.sciencedirect.com/science/article/pii/S0143816617303834/pdfft?md5=5a6232b5b5539e3a9f0b7aa05a27d76b&pid=1-s2.0-S0143816617303834-main.pdf> DOI: 10.1016/j.optlaseng.2017.07.016
- LEI HUANG ET AL: "Review of phase measuring deflectometry", OPTICS AND LASERS IN ENGINEERING, vol. 107, 1 August 2018 (2018-08-01), AMSTERDAM, NL, pages 247 - 257, XP055667367, ISSN: 0143-8166, DOI: 10.1016/j.optlaseng.2018.03.026
- POUYA FARD ALI ET AL: "Characterization of the interpolation bias in the analysis of deflectometry measurement data", PROCEEDINGS OF SPIE; [PROCEEDINGS OF SPIE; ISSN 0277-786X; VOL. 8615], SPIE, 1000 20TH ST. BELLINGHAM WA 98225-6705 USA, vol. 10749, 18 August 2018 (2018-08-18), pages 107490G - 107490G, XP060111570, ISBN: 978-1-5106-2099-5, DOI: 10.1117/12.2323420

EP 4 330 624 B1

- HUANG LEI ET AL: "Three-dimensional shape measurement with modal phase measuring deflectometry", PROCEEDINGS OF SPIE; [PROCEEDINGS OF SPIE ISSN 0277-786X VOLUME 10524], SPIE, US, vol. 10449, 13 June 2017 (2017-06-13), pages 1044909 - 1044909, XP060093423, ISBN: 978-1-5106-1533-5, DOI: 10.1117/12.2269017

- JONQUIÈRE HUGO ET AL: "Study of linear phase shift algorithms and application to deflectometry", OPTICS AND LASERS IN ENGINEERING, ELSEVIER, AMSTERDAM, NL, vol. 143, 10 April 2021 (2021-04-10), XP086552542, ISSN: 0143-8166, [retrieved on 20210410], DOI: 10.1016/J.OPTLASENG.2021.106640

## Description

La présente invention concerne un procédé pour estimer la géométrie d'une surface réfléchissante d'un objet, en particulier celle d'un miroir.

ARRIERE PLAN DE L'INVENTION

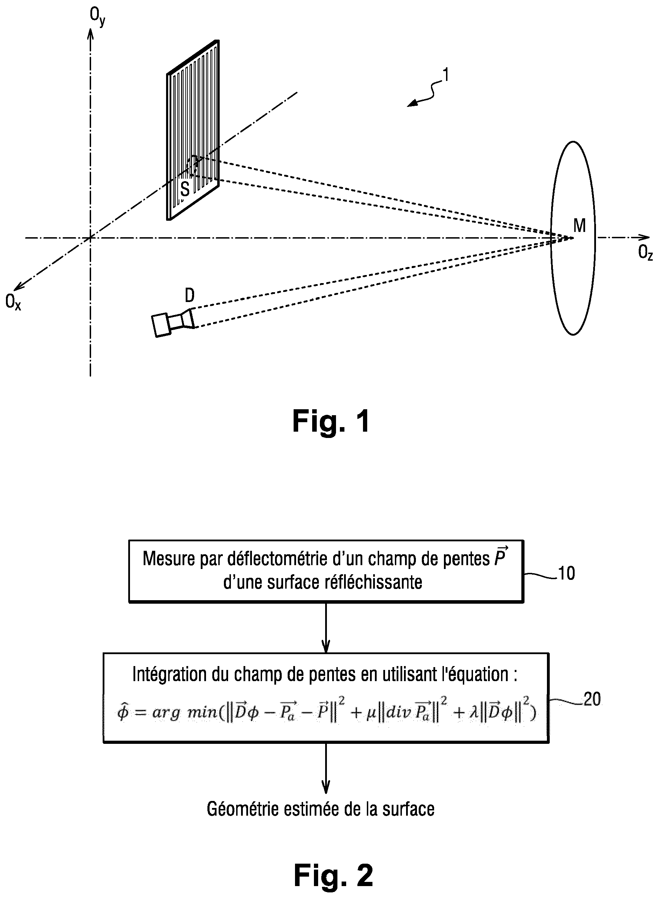

Le contrôle de la qualité d'une surface réfléchissante d'un objet peut être réalisé par une mesure déflectométrique dont le principe est illustré à la figure 1.

La déflectométrie à décalage de phase est une technique consistant à estimer la géométrie d'une surface d'un objet à partir de la déformation d'une image de mire réfléchie par la surface de l'objet.

Pour cela, un écran affiche une mire constituée d'un réseau de franges horizontales à profil sinusoïdal, et une caméra est agencée pour capturer une image du réseau de franges réfléchie par la surface de l'objet.

L'écran joue le rôle de règle graduée permettant de connaître l'ordonnée des points sources lumineux de l'écran. Cette ordonnée est en effet proportionnelle à la phase de la sinusoïde constituant le profil des franges. Le déphasage d'un pas régulier des franges permet d'évaluer, pour chaque pixel de la caméra, la phase du point source lumineux correspondant et donc sa position verticale.

De la même manière, l'affichage d'une mire constituée d'un réseau de franges verticales permet de connaître l'abscisse des points sources lumineux de l'écran.

Connaissant les positions relatives de l'écran, de l'objet et de la caméra, il est alors possible de modéliser la trajectoire des rayons lumineux émis par l'écran et donc d'avoir accès en tout point de la surface de l'objet à la direction de la normale à la surface. Cela permet de mesurer le champ des pentes de la surface de l'objet qui, une fois intégré, permet de reconstruire la géométrie de ladite surface de l'objet. On rappelle que le champ de pentes comprend une composante de type gradient et une composante de type rotationnel, et peut être modélisé comme suit :

$$\vec{P} = \vec{\nabla}\phi + \overrightarrow{rot}\vec{A}$$

où $\phi$ et $\vec{A}$ sont respectivement la composante gradient et la composante rotationnelle du champ de pentes P.

Il existe deux méthodes d'intégration : la méthode dite « modale » qui consiste à estimer la géométrie de la surface comme la somme de polynômes prédéfinis tels que les polynômes de Legendre ou Zernike ; et la méthode dite « zonale » qui consiste à estimer la géométrie de la surface pour chaque pixel de la caméra. Des méthodes dites modales et zonales sont décrites dans les documents suivants:

- XIAO YONG-LIANG ET AL: "Optical fringe-reflection deflectometry with sparse representation", OPTICS AND LASERS IN ENGINEERING, vol. 104, 1 mai 2018 (2018-05-01), pages 62-70
- LEI HUANG ET AL: "Review of phase measuring deflectometry",OPTICS AND LASERS IN ENGINEERING, vol. 107, 1 août 2018 (2018-08-01), pages 247-257
- POUYA FARD ALI ET AL: "Characterization of the interpolation bias in the analysis of deflectometry measurement data",PROCEEDINGS OF SPIE; vol. 10749, 18 août 2018 (2018-08-18), pages 107490G-1 à 6
- HUANG LEI ET AL: "Three-dimensional shape measurement with modal phase measuring deflectometry",PROCEEDINGS OF SPIE; vol. 10449, 13 juin 2017 (2017-06-13), pages 1044909-1 à 10
- JONQUIÈRE HUGO ET AL: "Study of linear phase shift algorithms and application to deflectometry",OPTICS AND LASERS IN ENGINEERING, ELSEVIER, AMSTERDAM, NL, vol. 143, 10 avril 2021 (2021-04-10), pages 1-11.

La méthode d'intégration modale revient à projeter le champ de pentes mesuré sur une base polynomiale et peut ainsi s'avérer peu précise pour la reconstruction de défauts à hautes fréquences spatiales, autrement dit de déformations variant sur une courte distance de l'ordre du millimètre.

Au contraire, une méthode d'intégration zonale fondée par exemple sur un modèle des données de type Southwell ou Fried, qui consiste dans sa version la plus simple à résoudre le problème inverse par la méthode des moindres carrés, est à privilégier pour la reconstruction de défauts à hautes fréquences spatiales.

Néanmoins, une telle méthode d'intégration ne tient pas compte des composantes rotationnelles du champ de pentes mesuré, ce qui peut engendrer une erreur de reconstruction importante des défauts hautes fréquences, notamment lorsque les composantes rotationnelles du champ de pentes mesuré dominent les composantes gradients dudit champ.

Qui plus est, dans le cadre d'une déflectométrie réalisée avec un dispositif non étalonné, des erreurs d'alignement du dispositif sont à l'origine d'une importante composante rotationnelle du champ de pentes mesuré, ce qui peut être limitant pour la reconstruction géométrique d'une surface optique, notamment issue de la technologie Freeform, ou fortement asphérique.

OBJET DE L'INVENTION

L'invention a donc pour objet d'améliorer l'estimation de la géométrie d'une surface réfléchissante d'un objet, en limitant l'influence des inconvénients précités.

RESUME DE L'INVENTION

A cet effet, l'invention propose un procédé pour estimer une géométrie d'une surface réfléchissante. Le procédé comprend les étapes de mesurer un champ de pentes de la surface par un dispositif déflectométrique relié à un ordinateur de traitement de mesures, puis d'intégrer le champ de pentes en modélisant la présence d'une composante rotationnelle dans le champ, et en recherchant conjointement une composante gradient dudit champ et des composantes rotationnelles d'erreurs d'alignement du dispositif déflectométrique. Ceci constitue un auto-étalonnage des erreurs d'alignement.

Selon un mode de réalisation particulier, l'étape d'intégration est réalisée en utilisant l'équation (E) suivante :

$$\hat{\phi} = \arg\ \min(\left\|\vec{D}\phi \mp \vec{P_a} - \vec{P}\right\|^2 + C(\vec{P_a}))$$

où :

- $\hat{\phi}$ est la géométrie estimée de la surface réfléchissante ;
- $\phi$ est la composante gradient du champ de pentes P;
- $\vec{D}$ est une matrice de dérivation modélisant la mesure du champ de pentes $\vec{P}$ ;
- $C(\vec{P_a})$ est un terme de pénalisation portant sur les erreurs d'alignement $\vec{P_a}$ du dispositif déflectométrique ;

et avec $C(\vec{P_a}) = \mu\|div\ \vec{P_a}\|^2$, où $\mu$ est un coefficient de régularisation, afin d'assurer que $div\vec{P_a}$ est proche de zéro.

Une telle équation est insensible à la présence d'une composante rotationnelle dans le champ de pentes, ce qui permet d'estimer avec précision la géométrie de la surface réfléchissante, notamment lorsque celle-ci est fortement asphérique.

Selon un autre mode de réalisation particulier, l'étape d'intégration est réalisée en utilisant l'équation (E) suivante :

$$\hat{\phi} = \arg\ \min(\left\|\vec{D}\phi \mp \vec{P_a} - \vec{P}\right\|^2 + C(\vec{P_a}) + R(\phi))$$

où :

- $\hat{\phi}$ est la géométrie estimée de la surface réfléchissante ;
- $\phi$ est la composante gradient du champ de pentes P;
- $D$ est une matrice de dérivation modélisant la mesure du champ de pentes $\vec{P}$ ;
- $C(\vec{P_a})$ est un terme de pénalisation portant sur les erreurs d'alignement $\vec{P_a}$ du dispositif déflectométrique ;
- $R(\phi)$ est un terme de régularisation ;

et avec $C(\vec{P_a}) = \mu\|div\ \vec{P_a}\|^2$ où $\mu$ est un premier coefficient de régularisation.

De manière particulière, le terme de régularisation $R(\phi)$ porte sur une densité spectrale de puissance de la géométrie estimée de la surface réfléchissante.

De manière particulière, $R(\phi) = \lambda\left\|\vec{D}'\phi\right\|^n$ avec n≥2 et où $\vec{D}'$ est une matrice de différenciation et $\lambda$ est un deuxième coefficient de régularisation.

De manière particulière, $R(\phi) = \lambda\|\phi\|^2$**.**

De manière particulière, la surface réfléchissante est un miroir.

De manière particulière, le miroir est un miroir asphérique.

BREVE DESCRIPTION DES DESSINS

L'invention sera mieux comprise à la lumière de la description qui suit, laquelle est purement illustrative et non limitative, et doit être lue en regard des dessins annexés parmi lesquels :

La figure 1 est une vue de principe d'un dispositif déflectométrique ;

La figure 2 est une vue schématique du procédé de l'invention ;

La figure 3A est une carte représentant une géométrie d'un miroir concave asphérique estimée selon un mode de réalisation particulier du procédé de l'invention ;

La figure 3B est une vue analogue à la figure 3A, représentant la géométrie du miroir estimée selon une mesure déflectométrique utilisant la méthode d'intégration de Southwell ;

La figure 3C est une vue analogue à la figure 3A, représentant la géométrie du miroir estimée selon une mesure interférométrique à décalage de phase ; et

La figure 3D est une vue analogue à la figure 3A, représentant une différence entre la mesure interférométrique illustrée à la figure 3C et la mesure illustrée à la figure 3A.

## DESCRIPTION DETAILLEE DE L'INVENTION

En référence à la figure 1, un miroir M comprend une surface réfléchissante dont on souhaite contrôler la qualité par un dispositif déflectométrique 1. Le dispositif déflectométrique 1 comprend un écran S agencé pour afficher une mire et une caméra D agencée pour capturer une image de la mire réfléchie par la surface du miroir M. La mire est constituée d'un motif périodique vertical comportant une alternance de franges sombres et claires à profil sinusoïdal s'étendant selon un axe Oy.

Une technique connue en soi consistant à déphaser d'un pas régulier les franges permet d'évaluer, pour chaque pixel de la caméra D, la phase du point source lumineux correspondant de l'écran S et donc sa position horizontale selon un axe Ox.

De la même manière, l'affichage d'une mire constituée d'un motif périodique horizontal à profil sinusoïdal permet d'évaluer la position verticale des points sources lumineux de l'écran S selon l'axe Oy.

Connaissant les positions relatives de l'écran S, du miroir M et de la caméra D, il est alors possible de modéliser la trajectoire des rayons lumineux émis par l'écran S et donc d'avoir accès en tout point de la surface du miroir M à la direction de la normale.

A cet effet, le dispositif déflectométrique 1 est relié à un ordinateur comprenant un processeur et une mémoire contenant un programme exécutable par le processeur. Le programme contient des instructions agencées pour mettre en œuvre le procédé de l'invention. Ce procédé comprend l'étape 10 de mesurer un champ de pentes P de la surface du miroir M puis l'étape 20 d'intégrer le champ de pentes P afin de reconstruire la géométrie de ladite surface du miroir M.

Le champ de pentes P est défini comme suit :

$$\vec{P} = \vec{\nabla}\phi + \overrightarrow{rot}\vec{A}$$

où $\phi$ et $\vec{A}$ sont respectivement la composante gradient et la composante rotationnelle du champ de pentes $\vec{P}$.

L'intégration 20 du champ de pentes $\vec{P}$ est réalisée par l'équation E suivante :

$$\hat{\phi} = \arg\ \min(\left\|\vec{D}\phi \mp \overrightarrow{P_a} - \vec{P}\right\|^2 + C(\overrightarrow{P_a}) + R(\phi))$$

où :

- $\hat{\phi}$ est la géométrie estimée de la surface réfléchissante du miroir M ;
- $D$ est une matrice de dérivation ;
- $C(\overrightarrow{P_a})$ est un terme de pénalisation portant sur des erreurs d'alignement $\overrightarrow{P_a}$ du dispositif déflectométrique 1 ; et
- $R(\phi)$ est un terme dit de régularisation imposant une régularité à la solution recherchée et portant ici sur une densité spectrale de puissance de la géométrie estimée de la surface du miroir M ;

et avec $C(\overrightarrow{P_a}) = \mu\|div\ \overrightarrow{P_a}\|^2$ et par exemple $R(\phi) = \lambda\ \|\vec{D}'\phi\|^2$ où $\mu$ et $\lambda$ sont des coefficients de régularisation et $\vec{D}'$ est une matrice de différentiation appliquée à la composante gradient $\phi$ du champ de pentes P, comme il est classique dans les problèmes inverses régularisés.

On comprend que le signe opératoire « $\mp$ » utilisé dans la première partie de l'équation E, $\arg\ \min(\|\vec{D}\phi \mp \overrightarrow{P_a} - \vec{P}\|^2)$, signifie que l'équation E peut s'écrire :

$$\hat{\phi} = \arg\ \min(\left\|\vec{D}\phi - \overrightarrow{P_a} - \vec{P}\right\|^2 + C(\overrightarrow{P_a}) + R(\phi))$$

ou

$$\hat{\phi} = \arg\,\min(\left\|\vec{D}\phi + \vec{P_a} - \vec{P}\right\|^2 + C(\vec{P_a}) + R(\phi))$$

Ceci relève d'un choix de modélisation : si on considère que les erreurs d'alignement appartiennent aux pentes mesurées, on modélise $\vec{P} \approx \vec{D}\phi + \vec{P_a}$ ; si on considère que les erreurs d'alignement appartiennent aux pentes modélisées, on modélise $\vec{P} \approx \vec{D}\phi - \vec{P_a}$.

On comprend également que la première partie de l'équation E, $\arg\,\min(\|\vec{D}\phi \mp \vec{P_a} - \vec{P}\|^2)$, est une estimation « brute » de la forme et des composantes rotationnelles sur la base de la méthode d'étalonnage.

Pour pouvoir mettre en œuvre le procédé de l'invention, il faut au préalable avoir modélisé les composantes $\vec{P_a}$ des erreurs d'alignement du montage déflectométrique, par exemple en mesurant le champ de pentes d'une surface de forme connue. Les composantes $\vec{P_a}$ des erreurs d'alignement sont caractérisées physiquement par un nombre restreint de polynômes calculés analytiquement. Les termes d'alignement sont alors décrits par un ensemble $c_a$ de coefficients et une matrice de polynômes $\vec{M_a}$ telle que $\vec{P_a} = \vec{M_a}c_a$. Les erreurs d'alignement comportent une composante gradient et une composante rotationnelle. Le terme de pénalisation $C(\vec{P_a})$ introduit comme terme supplémentaire au critère de moindre carré vise à éliminer de la géométrie estimée $\hat{\phi}$ la composante rotationnelle due aux erreurs d'alignement $\vec{P_a}$ du montage déflectométrique 1.

Le terme de régularisation $R(\phi)$ vise à stabiliser l'inversion (zonale donc à grand nombre d'inconnues) par l'introduction d'hypothèses physiques. L'ajout d'un tel terme de régularisation s'interprète au sens des probabilités de Bayes comme l'hypothèse ici retenue que la densité spectrale de puissance de la forme estimée du miroir décroit comme une loi de puissance, d'ordre -2 à - 4 par exemple. Cette hypothèse a été choisie pour correspondre à des conditions de polissage particulières de la surface du miroir M dont on cherche à estimer la forme. Tout critère de régularisation portant sur la densité spectrale de puissance et permettant de régulariser le problème peut être choisi.

On notera que dans l'hypothèse où la densité spectrale de puissance de la géométrie estimée de la surface du miroir M est uniforme, le terme de régularisation $R(\phi)$ devient $R(\phi) = \lambda\|\phi\|^2$.

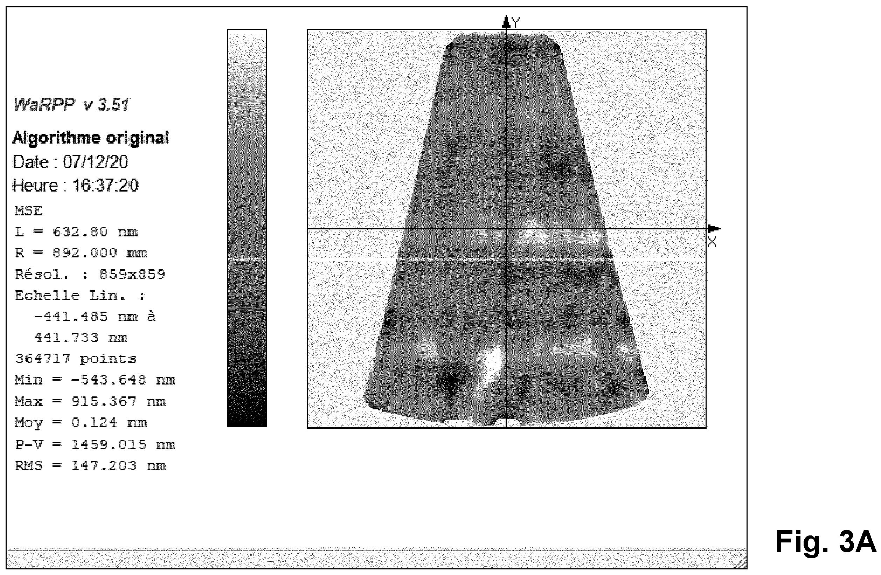

Les figures 3A à 3D illustrent l'efficacité de l'intégration du champ des pentes P par l'équation E.

La figure 3A représente une carte de la géométrie d'un miroir M de deux mètres de diamètre estimée par une mesure déflectométrique utilisant le dispositif déflectométrique 1 et l'équation E. L'écran S est un écran dix-neuf pouces non calibré ayant une résolution de 1280x1024 pixels, et la caméra D est une caméra ayant un capteur de 1.3 mégapixel et une fréquence d'image de 30 FPS. Le champ des pentes P a été intégré sur la base de l'équation E en minimisant le critère $\|\vec{D}\phi \mp \vec{P_a} - \vec{P}\|^2 + \mu\|div\vec{P_a}\|^2 + \lambda\|\vec{D}\phi\|^2$ par des méthodes de type matrice creuse et avec $\mu = \mathbf{10^9 mm^2}$ et $\lambda = 4{,}4.10^{-10}mm^2$. Les coefficients de régularisation $\mu$ et $\lambda$ sont ici définis de manière empirique.

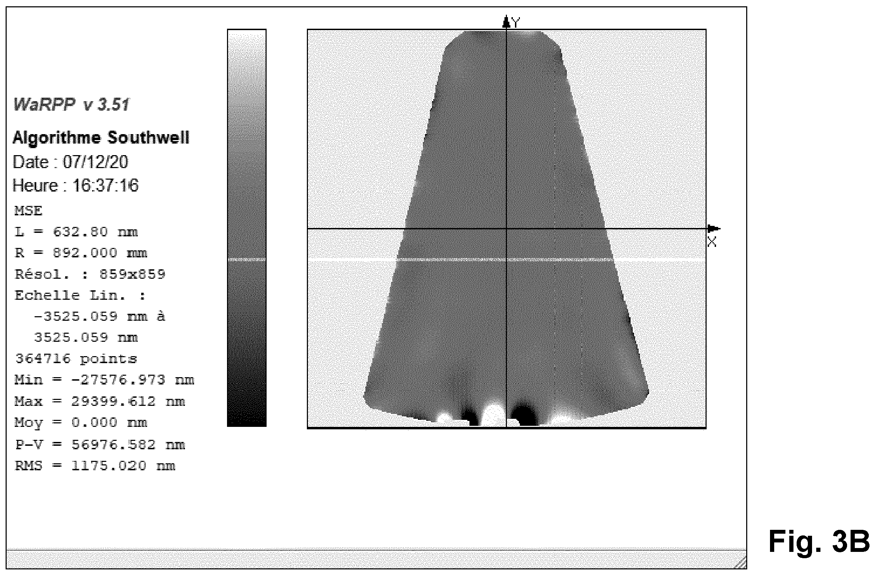

La carte illustrée à la figure 3B diffère de celle illustrée à la figure 3A en ce que la géométrie du miroir M est estimée par une mesure déflectométrique utilisant l'équation de Southwell, à savoir $\hat{\phi} = \arg\,\min(\|\vec{D}\phi - \vec{P}\|^2)$, et non celle de l'équation E.

Alors que la carte illustrée à la figure 3A présente un défaut haute de fréquence d'environ 147 nm (nanomètres) en écart quadratique, la carte illustrée à la figure 3B présente un défaut haute de fréquence d'environ 1175 nm en écart quadratique. Les défauts hautes fréquences apparaissent ainsi bien moins visibles sur la figure 3B que sur la figure 3A.

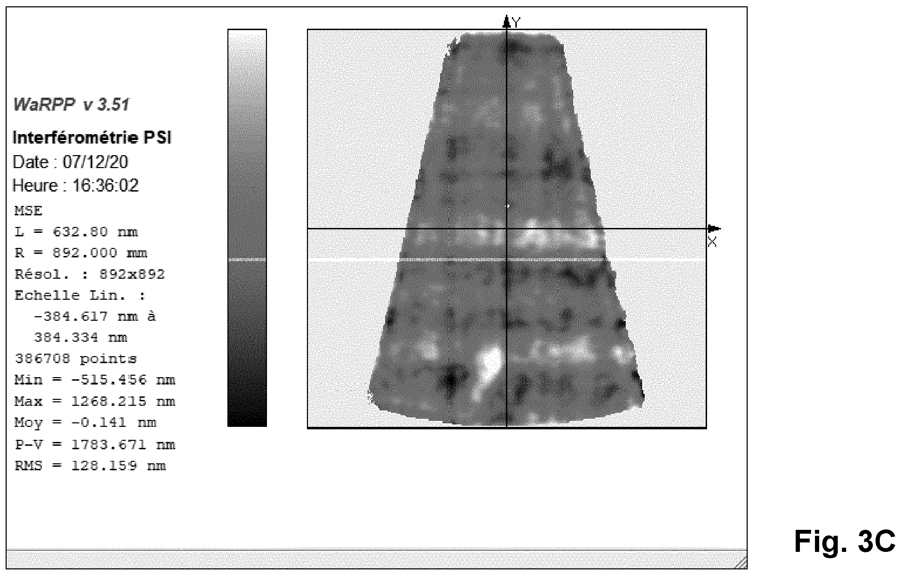

La carte illustrée à la figure 3C diffère de celle illustrée à la figure 3A en ce que la géométrie du miroir M est estimée par une mesure interférométrique à décalage de phase dite « PSI » (Phase Shift Interferometry). La carte illustrée à la figure 3C présente un défaut haute de fréquence d'environ 128 nm en écart quadratique, autrement dit relativement proche de celui relevé à la figure 3A. Les défauts hautes fréquences réels du miroir apparaissent ainsi tout aussi visibles sur la figure 3C que sur la figure 3A.

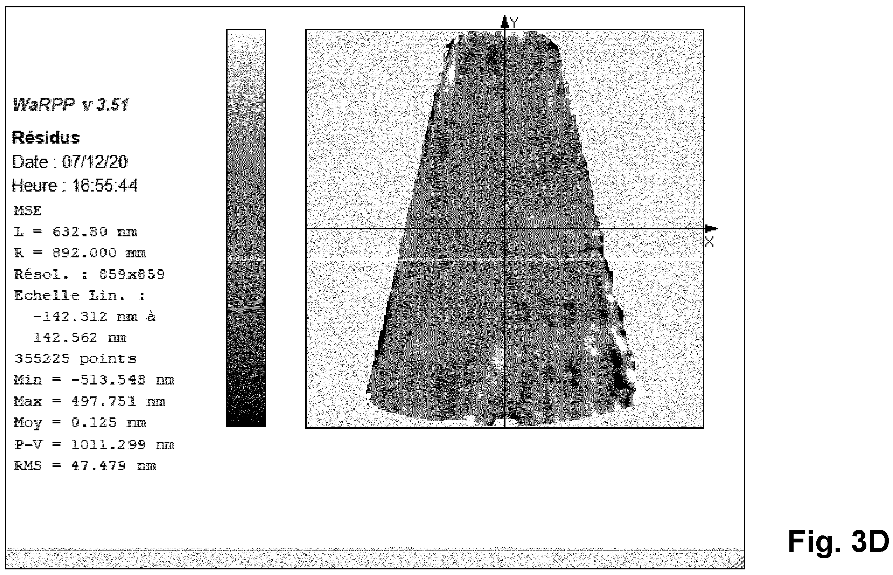

La carte de la figure 3D, appelée aussi « Résidus », représente la différence entre la mesure déflectométrique utilisant l'équation E illustrée à la figure 3A et la mesure interférométrique illustrée à la figure 3C. La mesure concernant les hautes fréquences spatiales du miroir M, les trente-six premiers polynômes de Legendre ont été soustraits à chacune des cartes des figures 3A et 3C. La différence entre les deux mesures est d'environ 47,5 nm en erreur quadratique.

Dès lors la mesure déflectométrique utilisant l'équation E est efficace et permet d'augmenter grandement la dynamique de mesure de la déflectométrie, en particulier sur des miroirs asphériques.

Bien entendu, l'invention n'est pas limitée au mode de réalisation décrit mais englobe toute variante entrant dans le champ de l'invention telle que définie par les revendications.

Bien qu'ici le champ des pentes P a été intégré sur la base de l'équation E par des méthodes de type matrice creuse, d'autres méthodes peuvent être utilisées pour minimiser le critère $\|\vec{D}\phi + \vec{P_a} - \vec{P}\|^2 + C(\vec{P_a}) + R(\phi)$: descente de gradient, quasi-Newton, recuit simulé, matricielle...

Toute forme de régularisation est utilisable. Le terme de régularisation $R(\phi)$ peut notamment être choisi indépendamment de toute mesure.

On pourra par exemple avoir $R(\phi) = \lambda\|\vec{D}\phi\|^n$ avec $n \geq 2$.

**Revendications**

1. Procédé pour estimer une géométrie d'une surface réfléchissante, comprenant les étapes de mesurer (10) un champ de pentes (P) de la surface par un dispositif déflectométrique (1) relié à un ordinateur de traitement de mesures, puis d'intégrer (20), via l'ordinateur de traitement de mesures, le champ de pentes en modélisant la présence d'une composante rotationnelle ($\vec{A}$) dans le champ, et en recherchant conjointement une composante gradient ($\phi$) dudit champ et des composantes rotationnelles d'erreurs d'alignement ($\vec{P_a}$) du dispositif déflectométrique.

2. Procédé selon la revendication 1, dans lequel l'étape d'intégration est réalisée en utilisant l'équation (E) suivante :

$$\hat{\phi} = \arg\,\min(\|\vec{D}\phi \mp \vec{P_a} - \vec{P}\|^2 + C(\vec{P_a}))$$

où :

- $\hat{\phi}$ est la géométrie estimée de la surface réfléchissante ;
- $\phi$ est la composante gradient du champ de pentes $\vec{P}$;
- $\vec{D}$ est une matrice de dérivation modélisant la mesure du champ de pentes $\vec{P}$ ;
- $C(\vec{P_a})$ est un terme de pénalisation portant sur les erreurs d'alignement $\vec{P_a}$ du dispositif déflectométrique 1 ;

et avec $C(\vec{P_a}) = \mu\|div\,\vec{P_a}\|^2$ où $\mu$ est un coefficient de régularisation.

3. Procédé selon la revendication 1, dans lequel l'étape d'intégration est réalisée en utilisant l'équation (E) suivante :

$$\hat{\phi} = \arg\,\min(\|\vec{D}\phi \mp \vec{P_a} - \vec{P}\|^2 + C(\vec{P_a}) + R(\phi))$$

où :

- $\hat{\phi}$ est la géométrie estimée de la surface réfléchissante ;
- $\phi$ est la composante gradient du champ de pentes P;
- $D$ est une matrice de dérivation modélisant la mesure du champ de pentes P ;
- $C(\vec{P_a})$ est un terme de pénalisation portant sur les erreurs d'alignement $\vec{P_a}$ du dispositif déflectométrique 1 ;
- $R(\phi)$ est un terme de régularisation ;

et avec $C(\vec{P_a}) = \mu\|div\,\vec{P_a}\|^2$ où $\mu$ est un premier coefficient de régularisation.

4. Procédé selon la revendication 3, dans lequel le terme de régularisation $R(\phi)$ porte sur une densité spectrale de puissance de la géométrie estimée de la surface réfléchissante.

5. Procédé selon la revendication 4, dans lequel $R(\phi) = \lambda\|\vec{D'}\phi\|^n$ avec $n \geq 2$ et où $\vec{D'}$ *est* une matrice de différenciation et $\lambda$ est un deuxième coefficient de régularisation.

6. Procédé selon la revendication 5, dans lequel $R(\phi) = \lambda\|\phi\|^2$**.**

7. Procédé selon l'une quelconque des revendications précédentes, dans lequel la surface réfléchissante est un miroir (M).

8. Procédé selon la revendication 3, dans lequel le miroir (M) est un miroir asphérique.

**Patentansprüche**

1. Verfahren zum Abschätzen einer Geometrie einer reflektierenden Oberfläche, umfassend die Schritte des Messens (10) eines Neigungsfeldes (P) der Oberfläche mittels einer Deflektometrievorrichtung (1), die mit einem Messverarbeitungsrechner verbunden ist, und anschließend Integrieren (20) des Neigungsfeldes über den Messverarbeitungsrechner durch Modellieren des Vorhandenseins einer Rotationskomponente ($\vec{A}$) im Feld, und gemeinsames Suchen nach einer Gradientenkomponente ($\phi$) dieses Feldes und den Rotationskomponenten von Ausrichtungs-fehlern ($\overrightarrow{P_a}$) der Deflektometrievorrichtung.

**2.** Verfahren nach Anspruch 1, wobei der Integrationsschritt unter Verwendung der folgenden Gleichung (E) durchge-führt wird:

$$\hat{\phi} = \arg\ \min(\left\|\vec{D}\phi \mp \overrightarrow{P_a} - \vec{P}\right\|^2 + C(\overrightarrow{P_a}))$$

wobei:

- $\hat{\phi}$ die geschätzte Geometrie der reflektierenden Oberfläche ist;
- $\phi$ die Gradientenkomponente des Neigungsfeldes $\vec{P}$ ist;
- D eine Ableitungsmatrix ist, die die Messung des Neigungsfeldes P modelliert;
- $C(\overrightarrow{P_a})$ ein Strafterm im Zusammenhang mit Ausrichtungsfehlern $\overrightarrow{P_a}$ der Deflektometrievorrichtung 1 ist;

und mit $C(\overrightarrow{P_a}) = \mu\|div\ \overrightarrow{P_a}\|^2$ wobei $\mu$ ein Regularisierungskoeffizient ist.

**3.** Verfahren nach Anspruch 1, wobei der Integrationsschritt unter Verwendung der folgenden Gleichung (E) durchge-führt wird:

$$\hat{\phi} = \arg\ \min(\left\|\vec{D}\phi \mp \overrightarrow{P_a} - \vec{P}\right\|^2 + C(\overrightarrow{P_a}) + R(\phi))$$

wobei:

- $\hat{\phi}$ die geschätzte Geometrie der reflektierenden Oberfläche ist;
- $\phi$ die Gradientenkomponente des Neigungsfeldes P ist;
- $\vec{D}$ eine Ableitungsmatrix ist, die die Messung des Neigungsfeldes $\vec{P}$ modelliert;
- $C(\overrightarrow{P_a})$ ein Strafterm im Zusammenhang mit Ausrichtungsfehlern $\overrightarrow{P_a}$ der Deflektometrievorrichtung 1 ist;
- $R(\phi)$ ein Regularisierungsterm ist;

**und mit** $C(\overrightarrow{P_a}) = \mu\|div\ \overrightarrow{P_a}\|^2$ wobei $\mu$ ein erster Regularisierungskoeffizient ist.

**4.** Verfahren nach Anspruch 3, wobei sich der Begriff Regularisierung $R(\phi)$ auf die spektrale Leistungsdichte der geschätzten Geometrie der reflektierenden Oberfläche bezieht.

**5.** Verfahren nach Anspruch 4, wobei R($\phi$) = $\lambda\|\vec{D}'\phi\|^n$ mit n $\geq$ 2 und wobei $\vec{D}'$ eine Differenzierungsmatrix ist und $\lambda$ ein zweiter Regularisierungskoeffizient ist.

**6.** Verfahren nach Anspruch 5, wobei $R(\phi)= \lambda\|\phi\|2$.

**7.** Verfahren nach einem der vorstehenden Ansprüche, wobei die reflektierende Oberfläche ein Spiegel (M) ist.

**8.** Verfahren nach Anspruch 3, wobei es sich bei dem Spiegel (M) um einen asphärischen Spiegel handelt.

**Claims**

**1.** Method for estimating a geometry of a reflective surface, comprising the steps of measuring (10) a slope field (P) of the surface by a deflectometric device (1) connected to a measurement processing computer, then of integrating (20), via the measurement processing computer, the slope field by modelling the presence of a rotational component ($\vec{A}$) in the field, and by jointly searching for a gradient component ($\phi$) of said field and rotational components of alignment errors ($\overrightarrow{P_a}$) of the deflectometric device.

**2.** Method according to claim 1, wherein the integration step is carried out by using the following equation (E):

$$\hat{\phi} = \arg \ \min(\left\|\vec{D}\phi \mp \vec{P_a} - \vec{P}\right\|^2 + C(\vec{P_a}))$$

where:

- $\hat{\phi}$ is the estimated geometry of the reflective surface;
- $\phi$ is the gradient component of the slope field P;
- $\vec{D}$ is a derivation matrix modelling the measurement of the slope field $\vec{P}$;
- $C(\vec{P_a})$ is a term of penalisation based on the alignment errors $\vec{P_a}$ of the deflectometric device 1;

and with $C(\vec{P_a}) = \mu\|div\,\vec{P_a}\|2$ where $\mu$ is a regularisation coefficient.

3. Method according to claim 1, wherein the integration step is carried out by using the following equation (E):

$$\hat{\phi} = \arg \ \min(\left\|\vec{D}\phi \mp \vec{P_a} - \vec{P}\right\|^2 + C(\vec{P_a}) + R(\phi))$$

where:

- $\hat{\phi}$ is the estimated geometry of the reflective surface;
- $\phi$ is the gradient component of the slope field $\vec{P}$;
- $\vec{D}$ is a derivation matrix modelling the measurement of the slope field $\vec{P}$;
- $C(\vec{P_a})$ is a term of penalisation based on the alignment errors $\vec{P_a}$ of the deflectometric device 1;
- $R(\phi)$ is a term of regularisation;

and with $C(\vec{P_a}) = \mu\|div\vec{P_a}\|2$ where $\mu$ is a first regularisation coefficient.

4. Method according to claim 3, wherein the term of regularisation $R(\phi)$ is based on a power spectral density of the estimated geometry of the reflective surface.

5. Method according to claim 4, wherein $R(\phi) = \lambda\|\vec{D'}\phi\|^n$ with n≥2 and where $\vec{D'}$ is a differentiation matrix and $\lambda$ is a second regularisation coefficient.

6. Method according to claim 5, wherein $R(\phi)=\lambda\|\phi\|^2$.

7. Method according to any one of the preceding claims, wherein the reflective surface is a mirror (M).

8. Method according to claim 3, wherein the mirror (M) is an aspherical mirror.

**Fig. 1**

**Fig. 2**

WaRPP v 3.51

**Algorithme original**

Date : 07/12/20

Heure : 16:37:20

MSE

L = 632.80 nm

R = 892.000 mm

Résol. : 859x859

Echelle Lin. :

   -441.485 nm à

   441.733 nm

364717 points

Min = -543.648 nm

Max = 915.367 nm

Moy = 0.124 nm

P-V = 1459.015 nm

RMS = 147.203 nm

**Fig. 3A**

EP 4 330 624 B1

WaRPP v 3.51

**Algorithme Southwell**

Date : 07/12/20

Heure : 16:37:16

MSE

L = 632.80 nm

R = 892.000 mm

Résol. : 859x859

Echelle Lin. :

  -3525.059 nm à

  3525.059 nm

364716 points

Min = -27576.973 nm

Max = 29399.612 nm

Moy = 0.000 nm

P-V = 56976.582 nm

RMS = 1175.020 nm

**Fig. 3B**

EP 4 330 624 B1

WaRPP v 3.51

Interférométrie PSI

Date : 07/12/20

Heure : 16:36:02

MSE

L = 632.80 nm

R = 892.000 mm

Résol. : 892x892

Echelle Lin. :

  -384.617 nm à

  384.334 nm

386708 points

Min = -515.456 nm

Max = 1268.215 nm

Moy = -0.141 nm

P-V = 1783.671 nm

RMS = 128.159 nm

Fig. 3C

WaRPP v 3.51

**Résidus**

Date : 07/12/20

Heure : 16:55:44

MSE

L = 632.80 nm

R = 892.000 mm

Résol. : 859x859

Echelle Lin. :

  -142.312 nm à

  142.562 nm

355225 points

Min = -513.548 nm

Max = 497.751 nm

Moy = 0.125 nm

P-V = 1011.299 nm

RMS = 47.479 nm

**Fig. 3D**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **XIAO YONG-LIANG et al.** Optical fringe-reflection deflectometry with sparse representation. *OPTICS AND LASERS IN ENGINEERING*, 01 May 2018, vol. 104, 62-70
- **LEI HUANG et al.** Review of phase measuring deflectometry. *OPTICS AND LASERS IN ENGINEERING*, 01 August 2018, vol. 107, 247-257
- **POUYA FARD ALI et al.** Characterization of the interpolation bias in the analysis of deflectometry measurement data. *PROCEEDINGS OF SPIE*, 18 August 2018, vol. 10749, 107490G-1

- **HUANG LEI et al.** Three-dimensional shape measurement with modal phase measuring deflectometry. *PROCEEDINGS OF SPIE*, 13 June 2017, vol. 10449, 1044909-1
- Study of linear phase shift algorithms and application to deflectometry. **JONQUIÈRE HUGO et al.** OPTICS AND LASERS IN ENGINEERING. ELSEVIER, 10 April 2021, vol. 143, 1-11